(19) **Europäisches Patentamt / European Patent Office / Office européen des brevets**

(11) **EP 1 958 985 B1**

(12) **EUROPEAN PATENT SPECIFICATION**

(45) Date of publication and mention
of the grant of the patent:
**21.04.2010 Bulletin 2010/16**

(51) Int Cl.:
*C08L 29/04* (2006.01)    *C08J 3/12* (2006.01)
*C09J 129/04* (2006.01)    *C09J 151/06* (2006.01)
*C09J 175/04* (2006.01)

(21) Application number: **06833090.1**

(22) Date of filing: **21.11.2006**

(86) International application number:
**PCT/JP2006/323244**

(87) International publication number:
**WO 2007/060960 (31.05.2007 Gazette 2007/22)**

(54) **RE-EMULSIFIABLE RESIN POWDER, AQUEOUS EMULSION AND ADHESIVE COMPOSITION USING SAME**

REEMULGIERBARES HARZPULVER UND DIESES ENTHALTENDE WÄSSRIGE EMULSION UND KLEBSTOFFFZUSAMMENSETZUNG

POUDRE DE RESINE RE-EMULSIFIABLE, EMULSION AQUEUSE ET COMPOSITION ADHESIVE L'UTILISANT

(84) Designated Contracting States:
**DE**

(30) Priority: **24.11.2005 JP 2005338202**

(43) Date of publication of application:
**20.08.2008 Bulletin 2008/34**

(73) Proprietor: **The Nippon Synthetic Chemical Industry Co., Ltd.**
**Osaka-shi,**
**Osaka 531-0076 (JP)**

(72) Inventors:
• **SUGAYA, Mamoru**
**Gifu 503-0973 (JP)**
• **NISHIHASHI, Yoichiro**
**Gifu 503-0973 (JP)**
• **IWASAKI, Hiroyuki**
**Gifu 503-0973 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
EP-A- 0 573 036    EP-A- 0 723 975
DE-A1- 19 620 817    DE-A1- 19 853 420
JP-A- 04 185 606    JP-A- 07 041 632
JP-A- 09 025 381    JP-A- 51 147 546
JP-A- 2000 109 703    JP-A- 2006 057 019

**Description**

TECHNICAL FIELD

The present invention relates to a re-emulsifiable resin powder obtained by drying an aqueous synthetic resin emulsion. More particularly, the invention relates to a re-emulsifiable resin powder for obtaining an aqueous emulsion which forms a film excellent in water resistance, warm-water resistance, and boiling resistance. The re-emulsifiable resin powder can be used in various applications including, in particular, an adhesive for a wood part or woody material or for paper, etc., an inorganic finishing material, a coating material, and an admixture for hydraulic materials such as a cement and plaster.

BACKGROUND ART

A re-emulsifiable resin powder is produced by drying (e.g., spray-drying) an aqueous synthetic resin emulsion. Since the re-emulsifiable resin powder is powdery, it is easy to handle as compared with the aqueous synthetic resin emulsion , which is mainly packed in cans or drums. The re-emulsifiable resin powder is usually packed in paper bags and, hence, advantageous also from the standpoints of product storage and transportation cost. Furthermore, compared to a general aqueous synthetic resin emulsion, the re-emulsifiable resin powder is reduced in volatile components such as residual monomers. Since the re-emulsifiable resin powder comprises no water, it never putrefies and does not necessitate an antifungal agent/preservatives. For such reasons, the re-emulsifiable resin powder has come to be considered as an environmentally sound product.

This re-emulsifiable resin powder, at time of use, can be re-emulsified in water by merely adding the powder to water and stirring the mixture. Because of this, the re-emulsifiable resin powder is being extensively used not only mainly as an admixture for cement products such as concrete structures and mortar and for plaster putty, but also for a coating material, an inorganic finishing material, an adhesive, etc. In particular, since the re-emulsifiable resin powder can be mixed beforehand with an inorganic hydraulic composition such as a cement or plaster, a cement product such as mortar or a plaster product can be formed by merely adding water thereto in situ.

Many of the re-emulsifiable resin powders which have been incorporated hitherto into inorganic hydraulic compositions such as mortar and plaster are re-emulsifiable resin powders of polymers formed from relatively highly hydrophilic monomers, such as vinyl acetate-based, ethylene/vinyl acetate-based, vinyl acetate/vinyl versatate-based, and vinyl acetate/acrylic-based, and give a film having almost no water resistance. Consequently, such re-emulsifiable resin powders are presently not used as an adhesive for a wood part or woody material which is required to have water resistance, since the physical properties thereof are insufficient. There has hence been a desire for a re-emulsifiable resin powder which gives a film having satisfactory water resistance and is suitable for use in adhesives for a wood part or woody material.

In general, many of the known re-emulsifiable resin powders capable of being re-emulsifiable in water are ones obtained by using vinyl ester-based monomers mainly comprising vinyl acetate as a main component and, as a protective colloid (dispersion stabilizer), a partially saponified polyvinyl alcohol having a low degree of polymerization, and by emulsion-polymerizing, since the powder is necessary to be re-emulsified (see, for example, patent document 1 and patent document 2).

Re-emulsifiable resin powders which have been proposed for the purpose of attaining water resistance include: an emulsion powder composition comprising an emulsion powder of a re-emulsifiable synthetic resin and the oxide or hydroxide of calcium or magnesium, as described in the above patent document 2; a re-dispersible synthetic resin powder where a polyvinyl alcohol-based resin absorbs on a surface of polymer particles comprising at least one of ethylenically unsaturated monomers and diene monomers, in which the polyvinyl alcohol-based resin has a block character of 0.3 to 0.6, and acetoacetic groups and/or mercapto groups (see, for example, patent document 3); and a re-dispersible synthetic resin powder obtained from an aqueous emulsion comprising an acetoacetic-ester-group-comprising polyvinyl alcohol which has that block character and which, when classified into specific particle-diameter ranges, has respective average acetoacetic esterification degrees, the value obtained by dividing the maximum value of the average acetoacetic esterification degrees by the minimum value thereof being 1.0 to 3.0 (see, for example, patent document 4).

Patent Document 1: JP-A-5-140325
Patent Document 2: JP-A-5-179008
Patent Document 3: JP-A-2002-60406
Patent Document 4: JP-A-2005-272481

DISCLOSURE OF THE INVENTION

PROBLEMS THAT THE INVENTION IS TO SOLVE

However, the technique disclosed in patent document 1 is not intended to give a film having water resistance. Even when a hydrophobic monomer selected mainly from acrylic-based, styrene-based, and vinyl-based and the like is used to produce an aqueous synthetic resin emulsion comprising an ordinary nonvolatile content (40 to 50%) in order to heighten water resistance of films, the polymerization stability was poor.

The techniques disclosed in patent documents 2 to 4 each attain an improvement in water resistance of films. In recent years, however, the adhesives for a wood part/woody material which are especially for use in the production of structural laminated wood or the like are required to have improved durability and required to have higher water resistance, warm-water resistance, and boiling resistance. Those techniques are still unsatisfactory and a further improvement has been necessary.

Accordingly, an object of the invention is to provide, in view of such background, a re-emulsifiable resin powder for obtaining an aqueous emulsion which forms a film excellent in water resistance, warm-water resistance, and boiling resistance.

MEANS FOR SOLVING THE PROBLEMS

The present inventors diligently made investigations under such circumstances. As a result, they have found that a re-emulsifiable resin powder, which is obtained from an aqueous synthetic resin emulsion dispersed and stabilized with a polyvinyl alcohol-based resin, has the following effects by using a hydrophobic monomer as a copolymerizable monomer in an aqueous synthetic resin in a larger amount than before, in which the hydrophobic monomer has a solubility in water at 20°C of 0.1% or lower. The powder, when re-emulsified in water, gives an emulsion having almost the same properties as the original emulsion before powdering. Furthermore, the film obtained therefrom is excellent in water resistance, warm-water resistance, and boiling resistance. The invention has been thus achieved.

Namely, an essential point of the invention resides in a re-emulsifiable resin powder, which is obtained from an aqueous synthetic resin emulsion dispersed and stabilized with a polyvinyl alcohol-based resin, wherein the aqueous synthetic resin includes, as a copolymerizable monomer, a hydrophobic monomer having a solubility in water at 20°C of 0.1% or lower in an amount of 30% by weight or larger based on all copolymerizable monomers.

It is preferred that the re-emulsifiable synthetic-resin powder of the invention is obtained by spray-drying the aqueous synthetic resin emulsion dispersed and stabilized with a polyvinyl alcohol-based resin.

In the invention, the aqueous synthetic resin preferably has a glass transition temperature of from -20 to +30°C from the standpoint of the strength of adhesion to a wood part/woody material. Furthermore, the hydrophobic monomer preferably' is styrene monomers from the stand points of warm-water resistance, boiling resistance, and cost.

The polyvinyl alcohol-based resin is a polyvinyl alcohol-based resin as defined in claim 1 comprising an active hydrogen. Such polyvinyl alcohol-based resin enables monomers such as acrylic-based monomers and styrene-based monomers to have satisfactory polymerization stability in emulsion polymerization and gives an emulsion having a high nonvolatile content. To obtain an emulsion having a high nonvolatile content leads to a saving of heat energy in emulsion drying, in particular, in spray drying.

It is furthermore preferred in the invention that the polyvinyl alcohol-based resin comprising an active hydrogen is an acetoacetyl group-modified polyvinyl alcohol-based resin having a degree of saponification of 90% by mole or higher, a degree of acetoacetylation of 0.01 to 10% by mole, and an average degree of polymerization of 50 to 2,000.

Moreover, from the standpoints of water resistance and boiling resistance with respect to a wood part/woody material, it is preferred in the invention that the aqueous synthetic resin further comprises, as a comonomer component, one or more functional monomers selected from the group consisting of the following (a) to (g), in particular, at least one of glycidyl group-comprising monomers and hydroxyl group-comprising monomers:

   (a) allyl group-comprising monomers,
   (b) glycidyl group-comprising monomers,
   (c) monomers comprising a hydrolyzable silyl group,
   (d) acetoacetyl group-comprising monomers,
   (e) monomers comprising two or more vinyl groups in the molecular structure,
   (f) carbonyl group-comprising monomers, and
   (g) hydroxy group-comprising monomers.

The invention relates to an aqueous emulsion obtained by re-emulsifying the re-emulsifiable resin powder described above.

The invention further relates to an adhesive composition comprising the re-emulsifiable synthetic resin powder or aqueous emulsion. Preferably, the invention relates to the adhesive composition further comprising a cross-linking agent. It is preferred that the cross-linking agent is an isocyanate compound or a prepolymer thereof.

The adhesive composition is exceedingly useful for an application to a wood part or woody material.

ADVANTAGES OF THE INVENTION

The re-emulsifiable synthetic-resin powder of the invention has an effect that the powder, when re-emulsified in water, gives an aqueous emulsion which forms a film excellent in water resistance, warm-water resistance, and boiling resistance. The powder is useful in various applications including, in particular, adhesives for a wood part or woody material or for paper, etc., an inorganic finishing material, a coating material, and an admixture for hydraulic materials such as a cement and plaster.

BEST MODE FOR CARRYING OUT THE INVENTION

The invention will be explained below in detail.

The re-emulsifiable synthetic resin powder of the invention is a re-emulsifiable resin powder, which is obtained from an aqueous synthetic resin emulsion dispersed and stabilized with a polyvinyl alcohol-based resin, wherein the aqueous synthetic resin includes, as a copolymerizable monomer, a hydrophobic monomer having a solubility in water at 20°C of 0.1% or lower in an amount of 30% by weight or larger based on all copolymerizable monomers.

The term "re-emulsifiable" resin powder herein means a powder which can yield an emulsion when the powder is re-emulsified in an aqueous medium (e.g., water).

First, the polyvinyl alcohol-based resin to be used in the invention is explained.

In the invention, a polyvinyl alcohol (hereinafter often referred to as "PVA") based resin is used as a protective colloid (dispersion stabilizer) in emulsion polymerization.

The PVA resin has a degree of saponification of preferably 85 to 99.5% by mole, especially 95 to 99% by mole. When the degree of saponification of the PVA-based resin is too low, there are cases where the polymerization is difficult to proceed stably. In this case, even when the polymerization is completed, the aqueous emulsion may have impaired storage stability. Too high degree of saponification of the PVA-based resin may result in difficulties in re-dispersing.

In this description, the degree of saponification can be determined through a measurement made by an ordinary method. For example, it can be determined according to the method of calculating the degree of saponification as provided for in JIS K 6726.

The average degree of polymerization of the PVA-based resin is preferably 200 to 1,000, especially preferably 200 to 500. When the average degree of polymerization of the PVA-based resin is too low, there are cases where the ability of this PVA-based resin to function as a protective colloid in emulsion polymerization is insufficient and the polymerization does not proceed stably. When the average degree of polymerization of the PVA-based resin is too high, there are cases where the viscosity increases during polymerization, resulting in the instability of the reaction system or the reduction of the re-dispersibility.

In this description, the average degree of polymerization can be determined through a measurement made by an ordinary method. For example, it can be determined according to the method of calculating the average degree of polymerization as provided for in JIS K 6726.

A PVA-based resin comprising an active hydrogen is used in the invention from the standpoint that this PVA-based resin enables copolymerizable monomers to have satisfactory reactivity and excellent polymerization stability.

The PVA-based resin comprising an active hydrogen is at least one member selected from acetoacetyl group-modified PVA-based resins, mercapto group-modified PVA-based resins, and PVA-based resins modified with diacetone acrylamide. Of these, acetoacetyl group-modified PVA-based resins are most preferred because they improve polymerization stability, improve the re-emulsifiability of the resin powder, and attain a higher ratio of grafting onto the synthetic resin to thereby improve water resistance of films.

In the invention, the acetoacetylation degree, which indicates the degree of modification of such an acetoacetyl group-modified PVA-based resin, is preferably 0.01 to 10% by mole, more preferably 0.01 to 6% by mole, even more preferably 0.03 to 3% by mole, especially preferably 0.03 to 2% by mole, most preferably 0.03 to 1% by mole. In case where the degree of acetoacetylation is too low, warm-water resistance, boiling resistance, and miscibility with fillers or the like tend to reduce. Too high degree of acetoacetylation tends to result in poor polymerization stability in emulsion polymerization.

With respect to the acetoacetyl groups present on the molecule of the PVA-based resin, the PVA resin in which the acetoacetyl groups are relatively randomly arranged in the molecule is preferred to that in which the acetoacetyl groups are gathered in a block arrangement in a certain region in the molecule.

The degree of saponification of the acetoacetyl group-modified PVA-based resin is preferably 90% by mole or higher, more preferably 97 to 99.8% by mole. When the degree of saponification is too low, there are cases where the polymerization is difficult to proceed stably. In this case, even when the polymerization is completed, the resultant aqueous synthetic resin emulsion may have impaired storage stability. When the degree of saponification of the acetoacetyl group-modified PVA-based resin is too high, there are cases where polymerization stability is poor and gelation occurs during the polymerization. Even when the polymerization is completed, the resultant powder may be difficult to re-emulsify.

The average degree of polymerization of the acetoacetyl group-modified polyvinyl alcohol-based is preferably from at least 50 to 2, 000, more preferably 200 to 600. When the average degree of polymerization of the PVA is too low, there are cases where the ability to function as a protective colloid in emulsion polymerization is insufficient and the polymerization does not proceed stably. When the average degree of polymerization thereof is too high, there are cases where the viscosity increases during polymerization, resulting in the instability of the reaction system or the reduction of the re-emulsifiability.

The amount of the PVA-based resin, preferably the acetoacetyl group-modified PVA-based resin, used as a protective colloid (dispersion stabilizer) in the invention is preferably 3 to 20% by weight, more preferably 4 to 10% by weight, based on all copolymerizable monomers used. When the amount of the PVA-based resin used is too small, there are cases where the amount of the protective colloid in emulsion polymerization is insufficient, resulting in poor polymerization stability. When the amount thereof is too large, there are cases where the resultant powder contains a large amount of the water-soluble ingredient although satisfactory in re-emulsifiability, resulting in reduced water resistance in applied applications.

In the invention, as the PVA-based resin, not only an acetoacetyl group-modified polyvinyl alcohol but also a combination thereof with an unmodified type of partially or fully saponified polyvinyl alcohol or the like may be used so long as this does not defeat the object of the invention.

Usually, the PVA-based resin is dissolved in an aqueous medium arid this aqueous solution is used in the course of emulsion polymerization in the invention. The term of aqueous medium herein means water or alcoholic solvent comprising water as a main component, and preferably means water.
The amount of the PVA-based resin (in terms of nonvolatile component) in this aqueous solution is not particularly limited. However, the amount thereof is desirably 5 to 30% by weight from the standpoint of handleability.

The aqueous synthetic resin to be dispersed and stabilized with a PVA-based resin will be explained next.
The aqueous synthetic resin in the invention is one obtained by emulsion-polymerizing copolymerizable monomers comprising a hydrophobic monomer in an amount of 30% by weight or larger based on all copolymerizable monomers.

The hydrophobic monomer may be any polymerizable monomer having a solubility in water at 20°C of 0.1% or lower. It may be selected from acrylic-based monomers, styrene-based monomers, and vinyl-based monomers.

Examples of the acrylic-based monomers among such hydrophobic monomers include (meth)acrylates having an alkyl group with 4 or more carbon atoms, preferably 6 to 18 carbon atoms, such as n-butyl methacrylate, i-butyl methacrylate, t-butyl methacrylate, 2-ethylhexyl (meth)acrylate, cyclohexyl (meth)acrylate, lauryl (meth)acrylate, octyl (meth)acrylate, and stearyl (meth)acrylate, phenoxyacrylates, and trifluoroethyl methacrylate. These may be used alone or in combination with two or more thereof.
The term of "(meth)acrylate" herein means acrylate or methacrylate.

Examples of the styrene-based monomers among the hydrophobic monomers include styrene and α-methylstyrene. These may be used alone or in combination with two or more thereof.
Examples of the vinyl-based monomers among the hydrophobic monomers include vinyl laurate, vinyl stearate, and vinyl versatate. These may be used alone or in combination with two or more thereof.

More preferred of those hydrophobic monomers are 2-ethylhexyl acrylate and styrene. In addition, a combination of two or more hydrophobic monomers can be used in the copolymerizable monomers according to the physical properties of the re-emulsifiable resin powder, etc.

In the invention, the hydrophobic monomer serves as an essential ingredient constituting the aqueous synthetic resin of the invention. The amount of the hydrophobic monomer to be used must be 30% by weight or more based on all copolymerizable monomers, and is preferably 40 to 90% by weight. In case where the content of the hydrophobic monomer is lower than 30% by weight, the desired water resistance and weatherability are insufficient.

In the invention, the copolymerizable monomers which can be copolymerized with the above hydrophobic monomer are not particularly limited. Use can be made of (meth)acrylic-based monomers such as (meth)acrylates having an alkyl group with 4 or less carbon atoms, preferably 3 or less carbon atoms, e.g., methyl (meth)acrylate, ethyl (meth) acrylate, n-butyl acrylate, i-butyl acrylate, and t-butyl acrylate. Use can be made of vinyl-based monomers, e.g., vinyl acetate and vinyl propionate.

Furthermore, in the invention the following copolymerizable monomers can be used in combination so long as this does not defeat the object of the invention.
Use can be made of olefin-based monomers such as ethylene, halogenated olefin-based monomers such as vinyl chloride, acrylamide-based monomers such as (meth)acrylamide, N,N-dimethylacrylamide, t-butylacrylamide, and 2-acrylamido-2-methylpropanesulfonic acid, nitrile-based monomers such as (meth)acrylonitrile, vinyl ether-based monomers such as methyl vinyl ether, ethylenically unsaturated carboxylic acids such as (meth) acrylic acid and itaconic acid (anhydride), and ester-based monomers thereof.

It is preferred in the invention that a functional monomer should be copolymerized together with the hydrophobic monomer in the emulsion polymerization, from the standpoints of warm-water resistance and boiling resistance in an application to a wood part/woody material. The functional monomer preferably is one or more members selected from the group consisting of the following (a) to (f):

(a) allyl group-comprising monomers,
(b) glycidyl group-comprising monomers,
(c) monomers comprising a hydrolyzable silyl group,
(d) acetoacetyl group-comprising monomers,
(e) monomers having two or more vinyl groups in the molecular structure,
(f) carbonyl group-comprising monomers, and
(g) hydroxy group-comprising monomers.

Examples of the allyl group-comprising monomers (a) include monomers having two or more allyl groups such as triallyloxyethylene, diallyl maleate, triallyl cyanurate, triallyl isocyanurate, andtetraallyloxyethane, allyl glycidyl ether and allyl acetate. Of these, allyl glycidyl ether is preferred from the standpoint of wet adhesiveness.

Examples of the glycidyl group-comprising monomers (b) include glycidyl (meth) acrylate, glycidyl (meth) allyl ether, and 3,4-epoxycyclohexyl (meth)acrylate. Of these, glycidyl (meth)acrylate is preferred from the standpoint of improving the water resistance of an adhesive for a wood part/woody material.

Examples of the monomers group-comprising a hydrolyzable silyl group (c) include vinyltrimethoxysilane, vinyltriethoxysilane, vinyltris(β-methoxyethoxy)silane, vinylmethyldimethoxysilane, γ-methacryloxypropyltrimethoxysilane, γ-methacryloxypropylmethyldimethoxysilane, γ-acryloxypropyltrimethoxysilane, γ-acryloxypropylmethyldimethoxysilane, γ-methacryloxypropyltriethoxysilane, and γ-methacryloxypropylmethyldiethoxysilane. Of these, vinyltrimethoxysilane is preferred from the standpoint of wet adhesiveness.

Examples of the acetoacetyl group-comprising monomers (d) include vinyl acetoacetate ester, allyl acetoacetate ester, allyl diacetoacetate ester, acetoacetoxyethyl (meth) acrylate, acetoacetoxyethyl crotonate, acetoacetoxypropyl (meth)acrylate, acetoacetoxypropyl crotonate, and 2-cyanoacetoacetoxyethyl (meth)acrylate. Of these, acetoacetoxyethyl (meth)acrylate is preferred from the standpoint of improving water resistance of an adhesive for a wood part/woody material.

Examples of the monomers having two or more vinyl groups in the molecular structure (e) include divinyl benzene, diallyl phthalate, triallyl cyanurate, triallyl isocyanurate, ethylene glycoldi(meth)acrylate, 1,2-propylene glycoldi (meth)acrylate, 1,3-propylene glycol di(meth)acrylate, 1,4-butanediol di(meth)acrylate, 1,6-hexanediol di(meth)acrylate, neopentyl glycol di(meth)acrylate, trimethylolpropane tri(meth)acrylate, and allyl (meth)acrylate.

Examples of the carbonyl group-comprising monomers (f) include diacetone acrylamide.

Examples of the hydroxy group-comprising monomers (g) include aliphatic (meth)acrylates such as 2-hydroxyethyl (meth)acrylate and hydroxypropyl (meth)acrylate. Of these, 2-hydroxyethyl methacrylate is preferred from the standpoint of improving water resistance of an adhesive for a wood part/woody material.

In a preferred embodiment of the invention, the functional monomer is preferably selected from the group consisting of glycidyl group-comprising monomers (b), monomers comprising a hydrolyzable silyl group (c), acetoacetyl group-comprising monomers (d), and hydroxy group-comprising monomers (g). Especially preferably, the functional monomer comprises at least one of glycidyl group-comprising monomers (b) andhydroxygroup-comprisingmonomers (g) from the stand point of improving the warm-water resistance and boiling resistance of an adhesive for a wood part/ woody material.

The amount of the functional monomer to be used is preferably 0.01 to 10% by weight, more preferably 0.05 to 5% by weight, especially preferably 0.1 to 5% by weight, based on all copolymerizable monomers. When the use amount thereof is too small, there are cases where improvements in water resistance and wet adhesiveness resistance are insufficient. When the use amount thereof is too large, there are cases where a polymerization failure occurs or re-emulsifiability decreases. Acombination of twoormore kinds of those functional groups can be used.

In the re-emulsifiable resin powder of the invention, other ingredients can be further used according to need besides the copolymerizable monomer ingredients described above, such as the hydrophobic monomer and the functional monomer. Such other ingredients are not particularly limited so long as the use thereof does not reduce the properties as the re-emulsifiable resin powder, and can be suitably selected according to purposes. Examples of such other ingredients include a polymerization initiator, polymerization controller, auxiliary emulsifier, plasticizer, and coalescing agents.

As the polymerization initiator, any initiator usable for ordinary emulsion polymerization can be used without particular limitations. Examples thereof include inorganic peroxides such as potassium persulfate, sodium persulfate, and ammonium persulfate; peroxides such as organic peroxides, azo initiators, hydrogen peroxide and butyl peroxide; and redox polymerization initiators comprising a combination of any of those compounds and a reducing agent such as acid sodium sulfite or L-ascorbic acid. Two or more of these may be used in combination. Ammonium persulfate and potassium persulfate are preferred of those in the invention because these initiators facilitate the polymerization without adversely influencing film properties and strength enhancement

The polymerization controller is not particularly limited, and can be suitably selected from known ones. Examples of the polymerization controller include chain transfers and buffers.

Examples of the chain transfer agents include alcohols such as methanol, ethanol, propanol, and butanol; aldehydes such as acetaldehyde, propionaldehyde, n-butylaldehyde, furfural, and benzaldehyde; and mercaptans such as dodecyl mercaptan, lauryl mercaptan, normal mercaptan, thioglycolic acid, octyl thioglycolate, and thioglycerol. Two or more of these may be used in combination. Although the use of the chin transfer agent is effective in causing the polymerization to proceed stably, it lowers the degree of polymerization of the synthetic resin. There is hence a possibility that the resultant synthetic resin might give a film having reduced water resistance or give an adhesive for a wood part/ woody material which is reduced in water resistance of adhesion strength, etc. It is therefore desirable that when a chain transfer agent is used, the amount of the agent to be used should be minimized.

Examples of the buffers include sodium acetate, ammonium acetate, and sodium secondary phosphate. Two or more of these may be used in combination.

As the auxiliary emulsifier, any emulsifier which is known for persons skilled in the art as usable for emulsion polymerization can be used. Consequently, the auxiliary emulsifier can be suitably selected from known ones such as, e.g., anionic, cationic, and nonionic surfactants, water-soluble polymers other than polyvinyl alcohol which have the ability to function as a protective colloid, and water-soluble oligomers.

Preferred examples of the surfactants include anionic surfactants such as sodium lauryl sulfate and sodium dodecylbenzenesulfonate and nonionic surfactants such as ones having a Pluronic-type structure and ones having a polyoxyethylene-type structure. As the surfactant, a polymerizable surfactant having a radical-polymerizable unsaturated bond in the structure may also be used. The use of an emulsifier enables the emulsion polymerization to proceed smoothly and to be easily controlled. In addition, the use thereof has the effect of inhibiting the generation of grit or coagula which are generated during the polymerization. However, in case where such a surfactant is used in a large amount as an emulsifier, this may cause particle aggregation during drying, resulting in reduced re-emulsifiability. It is therefore desirable that when a surfactant is used, the amount of the surfactant to be used should be auxiliary to the polyvinyl alcohol, i.e., should be minimized.

Examples of the water-soluble polymers other than the polyvinyl alcohol-based resin which have the ability to function as a protective colloid include hydroxyethyl cellulose, polyvinylpyrrolidone, and methyl cellulose. These polymers have the effect of changing the viscosity when the re-emulsifiable resin powder obtained is re-emulsified and used. However, there are cases where the water-soluble polymers, when used in some amounts, reduce the re-emulsifiability of the re-emulsifiable resin powder. It is therefore desirable that when such a water-soluble polymer is used, it should be used in such an amount as not to reduce the re-emulsifiability of the re-emulsifiable resin powder.

Preferred examples of the water-soluble oligomers include polymers or copolymers which have a degree of polymerization of about 10 to 500 and have hydrophilic groups such as sulfonic group, carboxyl group, hydroxyl group, or alkylene glycol group. Specific examples of the water-soluble oligomers include amide-based copolymers such as 2-methacrylamide/2-methylpropanesulfonic acid copolymers, sodium methacrylic acid/4-styrenesulfonate copolymers, styrene/maleic acid copolymers, melaminesulfonic acid/formaldehyde condensates, and poly(meth)acrylate. Examples thereof further include water-soluble oligomers obtained by subjecting a monomer having a sulfonic group, carboxyl group, hydroxyl group, alkylene glycol group or the like or a radical-polymerizable reactive emulsifier beforehand to copolymerization alone or with other monomer(s). Of these, 2-methacrylamide/2-methylpropanesulfonic acid copolymers and sodium methacrylic acid/4-styrenesulfonate copolymers are preferred in the invention from the standpoints of the impartation of re-emulsifiability and the stability in mixing with pigments and fillers such as calcium carbonate. The water-soluble oligomers to be used may be ones which are obtained beforehand by polymerization before initiation of the emulsion polymerization, or may be commercial products. Two or more of these may be used in combination.

As the plasticizer, use can be made of an adipate-based plasticizer, phthalic acid-based plasticizer, phosphoric acid-based plasticizer, or the like. A coalescing agent having a boiling point of 260°C or higher is also usable. The amount of such other ingredients to be used is not particularly limited so long as they do not defeat the object of the invention. The amount thereof can be suitably selected according to purposes.

A process for producing the re-emulsifiable synthetic resin powder of the invention will be explained next. As described above, the re-emulsifiable resin powder according to the invention can be produced by using a PVA-based resin as a protective colloid, emulsion-polymerizing copolymerizable monomers comprising a hydrophobic monomer and preferably further comprising a functional monomer, and thereby obtaining an aqueous synthetic resin emulsion and drying the emulsion preferably by spray drying.

Methods for the emulsion polymerization are not particularly limited. Examples thereof include: monomer dosing type emulsion polymerization method in which water and a protective colloid are added into a reaction vessel and heated and copolymerizable monomers and a polymerization initiator are dropped thereinto; and emulsified-monomer dosing type emulsion polymerization method in which monomers to be dropped are dispersed/emulsified beforehand with water and a protective colloid and then dropped. The monomer dosing type is convenient from the standpoints of the control of the polymerization step, etc.

In conducting the emulsion polymerization, the above other ingredients such as a polymerization initiator, polymerization controller, and auxiliary emulsifier other than the protective colloid, emulsifier and the above copolymerizable monomer ingredients are generally used according to need. Reaction conditions for the polymerization are not particularly limited, and can be suitably selected according to the kinds of the copolymerizable monomers, purposes, etc.

The step of emulsion polymerization is more specifically explained below.

First, water and a protective colloid are added into a reaction vessel optionally together with an auxiliary emulsifier, and the contents are heated (e.g., to 65 to 90°C). Thereafter, part of the copolymerizable monomer ingredients and a polymerization initiator are added into this reaction vessel to conduct kick off polymerization. Subsequently, the remaining copolymerizable monomer ingredients are added into the reaction vessel either all at once or dosing to cause polymerization to proceed while further adding the polymerization initiator according to need. At the time when the polymerization reaction is judged to have been completed, the reaction vessel is cooled. Thus, the target aqueous synthetic resin emulsion can be taken out.

The aqueous synthetic resin emulsion obtained by the emulsion polymerization in the invention typically is evenly milk-white and has an average particle diameter of preferably 0.2 to 2.0 $\mu$m, more preferably 0.3 to 1.5 $\mu$m. The average particle diameter of the emulsion can be determined by an ordinary method, for example, with laser diffraction/scattering type particle size distribution analyzer "LA-910" (manufactured by Horiba Ltd.).

The glass transition temperature of the aqueous synthetic resin in the aqueous synthetic resin emulsion is not particularly limited. However, the glass transition temperature thereof is preferably from -20 to +30°C from the standpoints of physical properties or the like including adhesion strength, etc., and is especially preferably from -15 to +20°C. In case where the glass transition temperature thereof is too low, adhesion strength tends to decrease. In case where the glass transition temperature thereof is too high, it is necessary to lower the film-forming temperature of this emulsion by incorporating a large amount of a plasticizer, e.g., dibutyl phthalate, and this tends to result in a decrease in adhesion strength resistance to warm water and boiling.

It is preferred in the invention that at least part of the polyvinyl alcohol-based resin is grafted onto the synthetic resin. The proportion of the synthetic resin comprising the grafted polyvinyl alcohol-based resin is preferably 50% by weight or higher, especially 60 to 95% by weight, in particular 65 to 85% by weight, based on the whole synthetic resin, from the standpoints of the storage stability of the resultant aqueous emulsion itself before drying and that such grafting reduces fluctuations of measured values in a measurement of adhesion strength. Too low proportions thereof tend to result in reducing the protective-colloid function in emulsion polymerization, reducing the polymerization stability, reducing the compatibility with fillers, etc. Examples of methods for regulating the proportion of the grafted synthetic resin to 50% or higher include: a method in which an emulsion polymerization temperature slightly higher than conventional ones is used; and a method in which a persulfate used as a catalyst for polymerization is used in combination with a slight amount of a reducing agent (e. g. , acid sodium sulfite or the like).

Various additives may be further added according to need to the aqueous synthetic resin emulsion obtained by the emulsion polymerization in the invention. Examples of such additives include organic pigments, inorganic pigments, water-soluble additives, pH controllers, preservatives, and antioxidants.

The water-soluble additive is one added for the purpose of improving the re-emulsifiability in water when the re-emulsifiable resin powder of the invention is dispersed in water. When the water-soluble additive is used, the water-soluble additive is usually added to the aqueous synthetic resin emulsion which has been obtained by emulsion polymerization and has not been dried. The amount of the water-soluble additive to be used is preferably 2 to 30% by weight based on the solid components of the aqueous synthetic resin emulsion before drying. When the amount thereof to be used is too large, there are cases where the re-emulsifiable resin powder has insufficient water resistance. When the amount thereof to be used is too small, there are cases where a sufficient improvement in re-emulsifiability is not attained.

Examples of the water-soluble additive include PVA, hydroxyethyl cellulose, methyl cellulose, starch derivatives, polyvinylpyrrolidone, polyethylene oxide, water-soluble alkyd resins, water-soluble phenolic resins, water-soluble urea resins, water-soluble melamine resins, water-soluble guanamine resins, water-soluble naphthalenesulfonate resins, water-soluble amino resins, water-soluble polyamide resins, water-soluble acrylic resins, water-soluble polycarboxylic resins, water-soluble polyester resins, water-soluble polyurethane resins, water-soluble polyol resins, and water-soluble epoxy resins. Two or more of these may be used in combination.

Of these, PVA is effective in improving re-emulsifiability in water. The PVA to be used may be the same as that used as a protective colloid in the step of emulsion polymerization or may be different from that. Although PVA having a high degree of polymerization is difficult to use during polymerization because of its polymerization stability, even such PVA can be added after the polymerization without posing any particular problem. However, since PVA having a low solubility in water may exert an adverse influence on re-emulsifiability, it is desirable to ascertain the solubility in water of the PVA before using the PVA.

Furthermore, modified PVA obtained by modification with a functional group such as an acetoacetyl group, mercapto group, carboxyl group, sulfonic group, alkoxyl group, or diacetone acrylamide group or the like can be used as the water-soluble additive in the invention.

The PVA or acetoacetyl-modified or diacetone-acrylamide-group-modified PVA as the water-soluble additive which is effective in improving re-emulsifiability in water can be used in suitable combination with the compound to be used as a cross-linking agent for the re-emulsifiable resin powder comprising these, such as an isocyanate-based compound, (poly)hydrazide-based compound, aziridine-based compound, epoxy-group-comprising compound, amine-based compound, aldehyde-based compound, methylolmelamine-based polymer, or polyvalent-metal compound (e.g., aluminum salt, Zircozole salt, or calcium salt).

In the case where the cross-linking agent is a powder, a one-pack type re-emulsifiable resin powder composition can be obtained by incorporating a necessary amount of this cross-linking agent beforehand into the re-emulsifiable resin powder.

In the invention, the aqueous synthetic resin emulsion obtained by the above emulsion polymerization is dried, whereby the re-emulsifiable resin powder can be obtained.

Methods for the drying are not particularly limited. Examples thereof include spray drying, freeze drying, and warm-air drying after flocculation. Of these, the spray drying is preferred from the standpoints of production cost and energy saving.

In the case of spray drying, the type of spraying is not particularly limited. For example, a disk type, nozzle type, or the like can be used. Examples of heat sources for the spray drying include hot air and heated steam. Conditions of the spray drying can be suitably selected according to the size and kind of the spray dryer, the solid content, viscosity, and flow rate of the aqueous emulsion, etc. The temperature for the spray drying is generally about 80 to 150°C.

In a specific example of the spray drying treatment, the solid content in the synthetic resin emulsion is first regulated. This emulsion is continuously supplied through a nozzle of a spray dryer to atomize the emulsion. The emulsion atomized is dried with warm air to thereby convert it into a powder.

In the invention, an anti-caking agent may also be used in combination, for example, by mixing the agent with the re-emulsifiable resin powder after the spray drying or by spraying the agent during the spray drying through a nozzle not for the aqueous synthetic resin emulsion. The addition of the anti-caking agent is intended to prevent the resin particles from caking, aggregating and blocking during storage, etc. by keeping the resin powder in the state of being covered with the anti-caking agent.

As the anti-caking agent can be used a known inert inorganic or organic powder such as, e.g., calcium carbonate, talc, clay, dolomite, silicic acid anhydride, white carbon, or alumina white. Preferred of these are silicic acid anhydride, calcium carbonate, clay, and the like. The amount of the anti-caking agent to be used is preferably about 2 to 30% by weight based on the re-emulsifiable resin powder obtained.

The re-emulsifiable synthetic resin powder of the invention is obtained in the manner described above. Before being used in various applications, the powder is re-emulsified in water and returned to an aqueous emulsion.

The re-emulsifiable resin powder of the invention is usable in various applications such as adhesives for a wood part/ woody material, additives for hydraulic materials such as various cements and plaster, powdered coating materials, and inorganic finishing materials. Preferably, the re-emulsifiable resin powder is useful as adhesives for a wood part/woody material or additives for hydraulic materials such as various cements and plaster.

In the invention, a cross-linking agent may be incorporated into the re-emulsifiable resin powder of the invention or into the aqueous emulsion of the invention or adhesive composition of the invention obtained by re-emulsifying the powder in water. Thus, the resultant composition can be used as an adhesive for the bonding of a wood part/woody material.

The cross-linking agent is not particularly limited. It is, however, preferred to use an isocyanate-based compound or prepolymer thereof or an epoxy-based compound or prepolymer thereof.

The amount of the cross-linking agent to be used is preferably 1 to 40% by weight, more preferably 5 to 25% by weight, based on the whole weight of the re-emulsifiable resin powder or the aqueous emulsion or adhesive composition obtained by re-emulsifying the powder in water.

Hitherto, on-site mixing type adhesives have been used which are generally obtained by incorporating a cross-linking agent into a main ingredient comprising (1) an aqueous synthetic resin emulsion (e.g., an ethylene/vinyl acetate-based or acrylic-based emulsion) and a styrene/butadiene-based latex or the like, (2) an aqueous PVA solution, (3) a filler such as, e.g., calcium carbonate, and (4) optional ingredients, e.g., a thickener. The aqueous synthetic resin emulsion as this main ingredient can be replaced by the re-emulsifiable resin powder of the invention. In addition, when powdery PVA is mixed in a necessary amount beforehand, this powder mixture is favorable because there is no need of preparing/ storing an aqueous PVA solution on site.

Furthermore, a filler such as calcium carbonate and, according to need, a thickener or the like can also be mixed beforehand. This means that the parts of the main ingredient of additives are supplied as one pack. Since such mixing operations are generally conducted in a factory while attaining quality control, a product of stable quality can be supplied. By merely re-emulsifying the main ingredient in water and adding thereto an isocyanate compound or prepolymer thereof or the like as a cross-linking agent on the site, an adhesive of even quality can be provided. This leads to an improvement in workability. In addition, since the re-emulsifiable resin powder never freezes, it has an advantage of being free from freezing troubles in cold districts unlike the aqueous synthetic resin emulsion.

Furthermore, when the re-emulsifiable resin powder of the invention is mixed with an inorganic hydraulic material, such as a cement or plaster, and with other powder material (s) (e.g., silica sand, flyash, limestone powder, calciumhydroxide, slaked lime, or calcium carbonate), then a one-pack powder product can be provided in this case also which can be made usable by merely kneading the product together with water on site.

As described above, the re-emulsifiable synthetic resin powder of the invention has the following effects. When re-emulsified in water, the re-emulsifiable resin powder gives an emulsion having almost the same physical properties as the original emulsion before powdering. Furthermore, the film obtained therefrom is excellent in water resistance, warm-water resistance, and boiling resistance. The re-emulsifiable resin powder is useful in various applications, in particular, an adhesive for a wood part or woody material or for paper or the like, an inorganic finishing material, a coating material, and an admixture for hydraulic materials such as a cement/plaster.

EXAMPLES

The invention will be explained below in more detail by reference to Examples. However, the invention is not be limited to the following Examples unless the invention departs from the spirit thereof.
In the following, "parts" and "%" mean by weight unless otherwise indicated.

Production Examples for Producing Emulsions of Aqueous Synthetic Resin

Emulsion 1:

Into a 2L reaction vessel made of stainless steel and equipped with a stirrer and a reflux condenser were introduced 670 parts of water and 46 parts of acetoacetyl group-modified PVA having a degree of saponification of about 98%, average degree of polymerization of about 400, and degree of acetoacetylation of 0.5% by mole (manufactured by The Nippon Synthetic Chemical Industry Co., Ltd.). The reaction vessel was heated to 85°C to dissolve the acetoacetyl group-modified PVA in water. Subsequently, while the temperature of this reaction vessel was kept at 80°C, 66 parts of a monomer mixture prepared beforehand (358 parts of butyl acrylate/293 parts of styrene/6.5 parts of glycidyl methacrylate = 54.5/44.5/1 (weight ratio) (hydrophobicmonomer=44.5%)) was added thereinto. Ammonium persulfate was used as a polymerization initiator to conduct kick off polymerization for 1 hour. Subsequently, the remainder of the monomer mixture was dropped into the reaction vessel over 4 hours to cause dosing polymerization to proceed while further adding ammonium persulfate as a polymerization initiator. After completion of the drop, the reaction mixture was aged at same temperature for 1 hour. Thereafter, 276 parts of a 20% aqueous solution of a partially saponified PVA having an average degree of polymerization of 600 and a degree of saponification of 88% by mole ("Gohsenol GL 05" (trade name), manufactured by The Nippon Synthetic Chemical Industry Co., Ltd.) was added to the reaction mixture. The resultant mixture was sufficiently stirred. Thus, an aqueous synthetic resin emulsion having a solid concentration of 46% (emulsion 1) was obtained.

This synthetic resin comprising that monomer composition (butyl acrylate/styrene/glycidyl methacrylate = 54.5/44.5/1 (weight ratio)) has a glass transition temperature (Tg) of -2°C as determined by a calculation, on the assumption that the Tg of these homopolymers are taken as -52°C, +100°C, and +41°C, respectively.

Emulsion 2:

The same procedure as for the production of emulsion 1 was conducted, except that the kinds and proportions of the monomers to be mixed were changed to butyl acrylate/2-ethylhexyl acrylate/styrene/glycidyl methacrylate = 20/25/54/1 (weight ratio) (hydrophobic monomers = 79%). Thus, emulsion 2 was produced.

This synthetic resin comprising that monomer composition (butyl acrylate/2-ethylhexyl acrylate/styrene/glycidyl methacrylate = 20/25/54/1 (weight ratio)) has a glass transition temperature (Tg) of +4°C as determined by a calculation, on the assumption that the Tg of these homopolymers are taken as -52°C, -70°C, +100°C, and +41°C, respectively.

Emulsion 3:

The same procedure as for the production of emulsion 1 was conducted, except that the kinds and proportions of the monomers to be mixed were changed to butyl acrylate/styrene/glycidyl methacrylate = 39.5/59.5/1 (weight ratio) (hydrophobic monomer = 59.5%). Thus, emulsion 3 was produced.

This synthetic resin comprising that monomer composition (butyl acrylate/styrene/glycidyl methacrylate = 39.5/59.5/1 (weight ratio)) has a glass transition temperature (Tg) of +20°C as determined by a calculation, on the assumption that the Tg of these homopolymers are taken as -52°C, +100°C, and +41°C, respectively.

For the purpose of regulating the minimum film-forming temperature, dibutyl phthalate was added as a plasticizer in an amount of 10% based on the resin ingredient.

Emulsion 4:

The same procedure as for the production of emulsion 1 was conducted, except that the kinds and proportions of the monomers to be mixed were changed to butyl acrylate/methyl methacrylate/2-ethylhexyl acrylate/styrene/glycidyl methacrylate = 20/34.5/24.5/20/1 (weight ratio) (hydrophobic monomers = 44.5%). Thus, emulsion 4 was produced.

This synthetic resin comprising that monomer composition (butyl acrylate/methyl methacrylate/2-ethylhexyl acrylate/styrene/glycidyl methacrylate = 20/34.5/24.5/20/1 (weight ratio)) has a glass transition temperature (Tg) of +5°C as determined by a calculation, on the assumption that the Tg of these homopolymers are taken as -52°C, +105°C, -70°C, +100°C, and +41°C, respectively.

Emulsion 5:

The same procedure as for the production of emulsion 1 was conducted, except that the kinds and proportions of the monomers to be mixed were changed to methyl methacrylate/2-ethylhexyl acrylate/glycidyl methacrylate = 48.5/50.5/1 (weight ratio) (hydrophobic monomer = 50.5%). Thus, emulsion 5 was produced.

This synthetic resin comprising that monomer composition (methyl methacrylate/2-ethylhexyl acrylate/glycidyl methacrylate = 48.5/50.5/1 (weight ratio)) has a glass transition temperature (Tg) of -10°C as determined by a calculation, on the assumption that the Tg of these homopolymersaretakenas+105°C, -70°C, and+41°C, respectively.

Emulsion 6:

The same procedure as for the production of emulsion 1 was conducted, except that the kinds and proportions of the monomers to be mixed were changed to butyl acrylate/styrene = 55/45 (weight ratio) (hydrophobic monomer = 45%). Thus, emulsion 6 was produced.

This synthetic resin comprising that monomer composition (butyl acrylate/styrene = 55/45 (weight ratio)) has a glass transition temperature (Tg) of -2°C as determined by a calculation, on the assumption that the Tg of these homopolymers are taken as -52°C and +100°C, respectively.

Emulsion 7:

The same procedure as for the production of emulsion 1 was conducted, except that the kinds and proportions of the monomers to be mixed were changed to butyl acrylate/2-ethylhexyl acrylate/styrene = 20/25/55 (weight ratio) (hydrophobic monomers = 80%). Thus, emulsion 7 was produced.

This synthetic resin comprising that monomer composition (butyl acrylate/2-ethylhexyl acrylate/styrene = 20/25/55 (weight ratio)) has a glass transition temperature (Tg) of +4°C as determined by a calculation, on the assumption that the Tg of these homopolymers are taken as -52°C, -70°C, and +100°C, respectively.

Emulsion 8:

The same procedure as for the production of emulsion 1 was conducted, except that the kinds and proportions of the monomers to be mixed were changed to butyl acrylate/styrene/2-hydroxyethyl methacrylate = 53.4/43.7/2.9 (weight ratio) (hydrophobic monomer =43.7%). Thus, emulsion 8 was produced.

This main synthetic resin comprising that monomer composition (butyl acrylate/styrene/2-hydroxyethyl methacrylate = 53.4/43.7/2.9 (weight ratio)) has a glass transition temperature (Tg) of -1°C as determined by a calculation, on the assumption that the Tg of these homopolymers are taken as -52°C, +100°C, and +55°C, respectively.

Emulsion 9 (Comparative Example):

The same procedure as for the production of emulsion 1 was conducted, except that the kinds and proportions of the monomers to be mixed were changed to butyl acrylate/styrene/glycidyl methacrylate = 74/25/1 (weight ratio) (hydrophobic monomer = 25%). Thus, emulsion 9 was produced.

This synthetic resin comprising that monomer composition (butyl acrylate/styrene/glycidyl methacrylate = 74/25/1) has a glass transition temperature (Tg) of -26°C as determined by a calculation, on the assumption that the Tg of these homopolymers are taken as -52°C, +100°C, and +41°C, respectively.

Emulsion 10 (Comparative Example):

The same procedure as for the production of emulsion 1 was conducted, except that the kinds and proportions of the monomers to be mixed were changed to butyl acrylate/methyl methacrylate/styrene/glycidyl methacrylate = 54.5/24.5/20/1 (weight ratio) (hydrophobic monomer = 20%). Thus, emulsion 10 was produced.

This synthetic resin comprising that monomer composition (butyl acrylate/methyl methacrylate/styrene/glycidyl methacrylate = 54.5/24.5/20/1 (weight ratio)) has a glass transition temperature (Tg) of -1°C as determined by a calculation, on the assumption that the Tg of these homopolymers are taken as -52°C, +105°C, +100°C, and +41°C, respectively.

Production Examples for Producing Re-Emulsifiable Resin Powder Compositions

Resin Powder Production Example 1:

The nonvolatile content of emulsion 1 was regulated. This emulsion was spray-dried under warm air at 150°C as a heat source in the presence of an anti-caking agent ("Hydrocarb" (trade name) (calcium carbonate), manufactured by PLUSS-STAUFER AG) with a nozzle type spray dryer. Thus, resin powder 1 was obtained.

Resin Powder Production Examples 2 to 8

The same procedure as that for resin powder 1 was conducted, except that each of emulsions 2 to 8 was used as the emulsion. Thus, resin powders 2 to 8 were obtained.

Resin Powder Production Examples 9 and 10 (Comparative Examples) :

The same procedure as that for resin powder 1 was conducted, except that each of emulsions 9 and 10 was used as the emulsion. Thus, resin powders 9 and 10 were obtained.

EXAMPLE 1

Twenty parts of calcium carbonate as a filler and 2 parts of hydroxyethyl cellulose were incorporated into 100 parts of the resin powder 1 obtained in Resin Powder Production Example 1. Ahundredparts of the resultantmixturewas dispersed in water, and the viscosity thereof was adjusted at 50,000 to 60,000 mPa·s (Brookfield viscometer, 10 rpm, 23°C). Thus, an adhesive composition for a wood part/woody material was obtained.

EXAMPLES 2 to 8

Resin powders 2 to 8 obtained in Resin Powder Production Examples 2 to 8 were used to obtain adhesive compositions for a wood part/woody material in the same manner as in Example 1.

COMPARATIVE EXAMPLES 1 and 2

Resin powders 9 and 10 obtained in Resin Powder Production Examples 9 and 10 were used to obtain adhesive compositions for a wood part/woody material in the same manner as in Example 1.

EVALUATION TESTS

Test 1: Polymerization Stability

With respect to each emulsion composition, whether gelation or grits generation occurred or not during polymerization was examined. When no such phenomenon occurred, polymerization stability was judged to be "good". When such phenomenon occurred or when the polymerization was completed without posing any particular problem and the resultant emulsion suffered a considerable viscosity increase or gelation after storing for 1 week at room temperature, then this case is indicated by "poor".

Test 2: Determination of Degree of Grafting

With respect to each of the emulsions obtained in each Production Examples for Producing Emulsions of Aqueous Synthetic Resin, the emulsion to which the aqueous PVA solution for later addition had not been added was used to be dried at 40°C for 16 hours to form a film having a thickness of about 0.5 mm. The film was allowed to stand under condition of 23°C and 65% RH for 2 days. This film was extracted with boiling water for 8 hours and then extracted with acetone for 8 hours. The degree of grafting was determined using the following equation, in which $W_1$ is absolute dry weight (g) of the film before the extraction and $W_2$ is absolute dry weight (g) of the film after the extraction.

$$\texttt{Degree of grafting (wt\%) = (W_2)/(W_1)} \times \texttt{100}$$

Absolute Dry Weight of Film after Extraction ($W_2$): The weight of the sample which had undergone the extraction and dried at 105°C for 1 hour.
Absolute Dry Weight of Film before Extraction ($W_1$): A sample prepared separately from the extraction test sample is dried beforehand at 105°C for 1 hour, and the absolute dry weight of the extraction sample film is calculated from the proportion of volatiles thus determined.

Test 3: Wood Adhesion Evaluation (JIS K6804; vinyl acetate resin emulsion adhesive for wood)

The adhesive compositions obtained in Examples 1 to 8 and Comparative Examples 1 and 2 were examined for compressive shear wood adhesion strength according to adhesion strength test method as provided for in JIS K 6804 (2003 publication).

The specific test method was as follows.

Straight-grain boards of birch as provided for in JIS K6804 were used. Each adhesive was applied to a bonding surface in an amount of 200 g/m², and the adherend board was placed thereon. After 10 minutes this was pressed under a load of 0. 8 MPa and kept in this state at 23°C for 24 hours. The pressure was removed, and after 48 hours the resultant sample was subj ected ' to measurements.
Ordinary-State Test: A test piece was held for 48 hours in a test room having a temperature of 23°C and a humidity of 50% and then tested as it was.
Water-Resistance Test: A test piece was immersed in water at 30°C for 3 hours, subsequently immersed in water at 23°C for 10 minutes, and then tested in the wet state.
The results obtained were evaluated based on the following criteria in conformity with JIS Type 1 and Type 2 qualities.
Criteria for Judgment:

A: The adhesion strength in the ordinary-state test is 10 N/mm² or higher and the adhesion strength in the water-resistance test is 4 N/mm² or higher.
B: The adhesion strength in the ordinary-state test is lower than 10 N/mm² and/or the adhesion strength in the water-resistance test is lower than 4 N/mm².

Test 4: Wood Adhesion Evaluation (JIS K6806; aqueous polymer/isocyanate-based adhesive for wood)

To 100 parts of each of the adhesive compositions obtained in Examples 1 to 8 and Comparative Examples 1 and 2 was added 15 parts of a cross-linking agent (polydimethyldiphenyl diisocyanate; manufactured by Nippon Polyurethane Co., Ltd.). The resultant mixture was sufficiently stirred to obtain an adhesive composition. This composition was examined for compressive shear wood adhesion strength according to the adhesion strength test method as provided for in JIS K 6806 (2003 publication).
The specific test method was as follows.
Straight-grain boards of birch as provided for in JIS K6806 were used. The adhesive comprising the cross-linking agent was evenly applied in an amount of 125 g/m² to each of the surfaces to be bonded. The two bonding surfaces were brought into intimate contact with each other. This was clamped at a pressure of 1,200 kPa and allowed to stand in this state at 23°C for 24 hours. After the pressure was removed, the resultant sample was subsequently allowed to stand at same temperature for 72 hours and then subjected to measurements. Ordinary-State Test: A test piece was produced and tested immediately thereafter.

Boiling Repetition Test: A test piece was immersed in boiling water for 4 hours, subsequently dried in air at 60°C for 20 hours, further immersed in boiling water for 4 hours, thereafter immersed in water at room temperature until the test piece cooled, and then tested in the wet state.

The results obtained were evaluated based on the following criteria in conformity with JIS Type 1, Number 1 performances.

Criteria for Judgment:

A: The compressive shear adhesion strength in ordinary state is 981 $N/cm^2$ or higher and the compressive shear adhesion strength after boiling repetition is 588 $N/cm^2$ or higher.

B: The compressive shear adhesion strength in ordinary state is lower than 981 $N/cm^2$ and/or the compressive shear adhesion strength after boiling repetition is lower than 588 $N/cm^2$.

The results of those evaluations are shown in Table 1.

[Table 1]

| | Polymerization stability | Degree of grafting (%) | JIS K 6804 Adhesion Strength | | | JIS K 6806 Adhesion Strength | | |
|---|---|---|---|---|---|---|---|---|
| | | | Ordinary-state test (N/mm$^2$) | Water resistance test (N/mm$^2$) | Evaluation | Ordinary state (N/cm$^2$) | Boiling repetition (N/cm$^2$) | Evaluation |
| Example 1 | good | 78 | 12.0 | 6.38 | A | 1700 | 749 | A |
| Example 2 | good | 77 | 12.8 | 6.19 | A | 1650 | 724 | A |
| Example 3 | good | 82 | 11.7 | 5.48 | A | 1460 | 668 | A |
| Example 4 | good | 78 | 12.5 | 6.33 | A | 1610 | 705 | A |
| Example 5 | good | 75 | 11.8 | 5.82 | A | 1430 | 683 | A |
| Example 6 | good | 68 | 11.8 | 5.68 | A | 1650 | 660 | A |
| Example 7 | good | 71 | 12.5 | 5.23 | A | 1580 | 642 | A |
| Example 8 | good | 72 | 13.3 | 6.25 | A | 1780 | 701 | A |
| Comparative Example 1 | good | 77 | 11.5 | 2.62 | B | 1170 | 286 | B |
| Comparative Example 2 | good | 77 | 11.7 | 3.30 | B | 1580 | 277 | B |

While the invention has been described in detail and with reference to specific embodiments thereof, it will be apparent to one skilled in the art that various changes and modifications can be made therein without departing from the spirit and scope thereof.

This application is based on a Japanese patent application filed on November 24, 2005 (Application No. 2005-338202), the contents thereof being herein incorporated by reference.

INDUSTRIAL APPLICABILITY

The re-emulsifiable synthetic resin powder of the invention has the following effects. When re-emulsified in water, the re-emulsifiable resin powder gives an emulsion having almost the same physical properties as the original emulsion before powdering. Furthermore, the film obtained therefrom is excellent in water resistance, warm-water resistance, and boiling resistance. The re-emulsifiable resin powder is useful in various applications, in particular, an adhesive for a wood part or woody material or for paper or the like, an inorganic finishing material, a coating material, and an admixture for hydraulic materials such as a cement/plaster.

## Claims

1. A re-emulsifiable resin powder, which is obtained from an aqueous synthetic resin emulsion dispersed and stabilized with a polyvinyl alcohol-based resin, wherein the aqueous synthetic resin includes, as a copolymerizable monomer, a hydrophobic monomer having a solubility in water at 20°C of 0.1% or lower in an amount of 30% by weight or larger based on all copolymerizable monomers; and wherein the polyvinyl alcohol-based resin is at least one member selected from acetoacetyl group modified PVA-based resins, mercapto group modified PVA-based resins and PVA-based resins modified with diacetone acrylamide.

2. The re-emulsifiable resin powder according to claim 1, which is obtained by spray-drying the aqueous synthetic resin emulsion dispersed and stabilized with a polyvinyl alcohol-based resin.

3. The re-emulsifiable resin powder according to claim 1 or 2, wherein the aqueous synthetic resin has a glass transition temperature of from -20 to +30°C.

4. The re-emulsifiable resin powder according to any one of claims 1 to 3, wherein the hydrophobic monomer is styrene monomers.

5. The re-emulsifiable resin powder according to claim 1, wherein the polyvinyl alcohol-based resin comprising an active hydrogen is an acetoacetyl group-modified polyvinyl alcohol-based resin having a degree of saponification of 90% by mole or higher, a degree of acetoacetylation of 0.01 to 10% by mole, and an average degree of polymerization of 50 to 2,000.

6. The re-emulsifiable resin powder according to any one of claims 1 to 5, wherein at least part of the polyvinyl alcohol-based resin is grafted onto the aqueous synthetic resin and the proportion of the grafted synthetic resin is 50% by weight or higher based on the whole synthetic resin.

7. The re-emulsifiable resin powder according to any one of claims 1 to 6, wherein the aqueous synthetic resin further comprises, as a comonomer component, one or more functional monomers selected from the group consisting of (a) to (g):

   (a) allyl group-comprising monomers,
   (b) glycidyl group-comprising monomers,
   (c) monomers comprising a hydrolyzable silyl group,
   (d) acetoacetyl group-comprising monomers,
   (e) monomers having two or more vinyl groups in the molecular structure,
   (f) carbonyl group-comprising monomers, and
   (g) hydroxyl group-comprising monomers.

8. The re-emulsifiable resin powder according to claim 7, wherein the functional monomers are at least one of the glycidyl group-comprising monomers and hydroxyl group-comprising monomers.

9. An aqueous emulsion which is obtained by re-emulsifying the re-emulsifiable resin powder according to any one of claims 1 to 8.

10. An adhesive composition which comprises the re-emulsifiable synthetic resin powder according to any one of claims 1 to 8.

11. An adhesive composition which comprises the aqueous emulsion according to claim 9.

12. The adhesive composition according to claim 10 or 11, which further comprises a cross-linking agent.

13. The adhesive composition according to claim 12, wherein the cross-linking agent is an isocyanate compound or a prepolymer thereof.

14. The adhesive composition according to any one of claims 10 to 13, which is used for an application to a wood part or woody material.

**Patentansprüche**

1. Reemulgierbares Harzpulver, welches aus einer Emulsion eines wässrigen synthetischen Harzes erhalten wird, das mit einem Harz auf Basis von Polyvinylalkohol dispergiert und stabilisiert wird, wobei das wässrige synthetische Harz als copolymerisierbares Monomer ein hydrophobes Monomer einschließt, das eine Löslichkeit in Wasser bei 20°C von 0,1 % oder geringer aufweist, in einer Menge von 30 Gewichtsprozent oder höher, basierend auf allen copolymerisierbaren Monomeren; und worin das Harz auf Basis von Polyvinylalkohol wenigstens ein Element ist, ausgewählt aus Acetoacetylgruppen-modifizierten Harzen auf Basis von PVA, Mercaptogruppen-modifizierten Harzen auf Basis von PVA und Harzen auf Basis von PVA, die mit Diaceton-Acrylamid modifiziert sind.

2. Reemulgierbares Harzpulver nach Anspruch 1, welches durch Sprühtrocknen der Emulsion des wässrigen synthetischen Harzes erhalten wird, das mit einem Harz auf Basis von Polyvinylalkohol dispergiert und stabilisiert wird.

3. Reemulgierbares Harzpulver nach Anspruch 1 oder 2, wobei das wässrige synthetische Harz eine Glasübergangstemperatur von -20 bis +30°C aufweist.

4. Reemulgierbares Harzpulver nach einem der Ansprüche 1 bis 3, wobei das hydrophobe Monomer Styrolmonomere sind.

5. Reemulgierbares Harzpulver nach Anspruch 1, wobei das einen aktiven Wasserstoff umfassende Harz auf Basis von Polyvinylalkohol ein Acetoacetylgruppenmodifiziertes Harz auf Basis von Polyvinylalkohol ist, das einen Verseifungsgrad von 90 Molprozent oder höher aufweist, einen Acetoacetylierungsgrad von 0,01 bis 10 Molprozent und einen durchschnittlichen Polymerisationsgrad von 50 bis 2000.

6. Reemulgierbares Harzpulver nach einem der Ansprüche 1 bis 5, wobei wenigstens ein Teil des Harzes auf Basis von Polyvinylalkohol auf das synthetische Harz gepfropft ist und der Anteil des gepfropften synthetischen Harzes 50 Gewichtsprozent oder höher, basierend auf dem gesamten synthetischen Harz, beträgt.

7. Reemulgierbares Harzpulver nach einem der Ansprüche 1 bis 6, wobei das wässrige synthetische Harz ferner, als Comonomer-Bestandteil, ein oder mehrere funktionelle Monomere umfasst, ausgewählt aus der Gruppe, bestehend aus

    (a) bis (g):
    (a) Allylgruppen umfassende Monomere;
    (b) Glycidylgruppen umfassende Monomere;
    (c) eine hydrolysierbare Silylgruppe umfassende Monomere;
    (d) Acetoacetylgruppen umfassende Monomere;
    (e) Monomere, die zwei oder mehrere Vinylgruppen in der Molekülstruktur aufweisen;
    (f) Carbonylgruppen umfassende Monomere; und
    (g) Hydroxylgruppen umfassende Monomere.

8. Reemulgierbares Harzpulver nach Anspruch 7, wobei die funktionellen Monomere wenigstens aus einem, den Glycidylgruppen umfassenden Monomeren und den Hydroxylgruppen umfassenden Monomeren bestehen.

9. Wässrige Emulsion, die durch Reemulgieren des reemulgierbaren Harzpulvers nach einem der Ansprüche 1 bis 8 erhalten wird.

10. Haftmittelzusammensetzung, die ein reemulgierbares synthetisches Harzpulver nach einen der Ansprüche 1 bis 8 umfasst.

11. Haftmittelzusammensetzung, die eine wässrige Emulsion nach Anspruch 9 umfasst.

12. Haftmittelzusammensetzung nach Anspruch 10 oder 11, die ferner ein Vernetzungsmittel umfasst.

13. Haftmittelzusammensetzung nach Anspruch 12, wobei das Vernetzungsmittel eine Isocyanatverbindung oder ein Präpolymer derselben ist.

14. Haftmittelzusammensetzung nach einem der Ansprüche 10 bis 13, die für die Anwendung auf einem Holzteil oder einem Material aus Holz verwendet wird.

**Revendications**

1. Poudre de résine ré-émulsionnable, laquelle est obtenue à partir d'une émulsion de résine synthétique aqueuse dispersée et stabilisée avec une résine à base de poly(alcool vinylique), dans laquelle la résine synthétique aqueuse comprend, comme monomère copolymérisable, un monomère hydrophobe ayant une solubilité dans l'eau à 20°C de 0,1 % ou inférieure dans une quantité de 30 % en poids ou supérieure rapporté à tous les monomères copolymérisables ; et dans laquelle la résine à base de poly(alcool vinylique) est au moins un élément choisi parmi des résines à base de PVA modifiées par un groupe acétoacétyle, des résines à base de PVA modifiées par un groupe mercapto et des résines à base de PVA modifiées avec du diacétone acrylamide.

2. Poudre de résine ré-émulsionnable selon la revendication 1, laquelle est obtenue par séchage par pulvérisation de l'émulsion de résine synthétique aqueuse dispersée et stabilisée avec une résine à base de poly(alcool vinylique).

3. Poudre de résine ré-émulsionnable selon la revendication 1 ou 2, dans laquelle la résine synthétique aqueuse présente une température de transition vitreuse de -20 à +30°C.

4. Poudre de résine ré-émulsionnable selon l'une quelconque des revendications 1 à 3, dans laquelle le monomère hydrophobe est constitué de monomères de styrène.

5. Poudre de résine ré-émulsionnable selon la revendication 1, dans laquelle la résine à base de poly(alcool vinylique) comprenant un hydrogène actif est une résine à base de poly(alcool vinylique) modifiée par un groupe acétoacétyle ayant un degré de saponification de 90 % en mole ou supérieur, un degré d'acétoacétylation de 0,01 à 10 % en mole et un degré moyen de polymérisation de 50 à 2 000.

6. Poudre de résine ré-émulsionnable selon l'une quelconque des revendications 1 à 5, dans laquelle au moins une partie de la résine à base de poly(alcool vinylique) est greffée sur la résine synthétique aqueuse et la proportion de la résine synthétique greffée est de 50 % en poids ou supérieure rapporté à la résine synthétique totale.

7. Poudre de résine ré-émulsionnable selon l'une quelconque des revendications 1 à 6, dans laquelle la résine synthétique aqueuse comprend de plus, comme constituant comonomère, un ou plusieurs monomères fonctionnels choisis dans le groupe constitué de (a) à (g) :

   (a) des monomères comprenant un groupe allyle ;
   (b) des monomères comprenant un groupe glycidyle,
   (c) des monomères comprenant un groupe silyle hydrolysable,
   (d) des monomères comprenant un groupe acétoacétyle,
   (e) des monomères présentant deux ou plusieurs groupes vinyle dans la structure moléculaire,
   (f) des monomères comprenant un groupe carbonyle, et

(g) des monomères comprenant un groupe hydroxyle.

**8.** Poudre de résine ré-émulsionnable selon la revendication 7, dans laquelle les monomères fonctionnels sont au moins un parmi des monomères comprenant un groupe glycidyle et des monomères comprenant un groupe hydroxyle.

**9.** Emulsion aqueuse qui est obtenue en ré-émulsionnant la poudre de résine ré-émulsionnable selon l'une quelconque des revendications 1 à 8.

**10.** Composition adhésive qui comprend la poudre de résine synthétique ré-émulsionnable selon l'une quelconque des revendications 1 à 8.

**11.** Composition adhésive qui comprend l'émulsion aqueuse selon la revendication 9.

**12.** Composition adhésive selon la revendication 10 ou 11, laquelle comprend de plus un agent de réticulation.

**13.** Composition adhésive selon la revendication 12, dans laquelle l'agent de réticulation est un composé isocyanate ou un prépolymère de celui-ci.

**14.** Composition adhésive selon l'une quelconque des revendications 10 à 13, laquelle est utilisée pour une application sur une pièce en bois ou un matériau en bois.

## REFERENCES CITED IN THE DESCRIPTION

**Patent documents cited in the description**

- JP 5140325 A
- JP 5179008 A
- JP 2002060406 A
- JP 2005272481 A
- JP 2005338202 A